# EUROPÄISCHE PATENTSCHRIFT

(11) **EP 3 228 747 B1**
(45) Veröffentlichungstag und Bekanntmachung des Hinweises auf die Patenterteilung: **04.07.2018**
(21) Anmeldenummer: 16164466.1
(22) Anmeldetag: 08.04.2016
(51) Int. Cl.: E01C 19/00, E01C 19/48

(54) **STRASSENFERTIGER MIT HALTEVORRICHTUNG ZUM TRAGEN UND POSITIONIEREN EINER SENSOREINHEIT**
ROAD FINISHER WITH HOLDING DEVICE FOR HOLDING AND POSITIONING A SENSOR UNIT
FINISSEUSE DE ROUTE COMPRENANT UN DISPOSITIF DE RETENUE DESTINÉ À PORTER ET À POSITIONNER UNE UNITÉ DE CAPTEUR

(43) Veröffentlichungstag der Anmeldung: 11.10.2017
(73) Patentinhaber: Joseph Vögele AG, 67075 Ludwigshafen (DE)
(72) Erfinder: HERZBERG, Ingo, 74918 Angelbachtal (DE)
(74) Vertreter: Grünecker Patent- und Rechtsanwälte PartG mbB

(56) Entgegenhaltungen:
- DE-T2- 60 226 237
- DE-T2- 69 126 017
- US-A- 5 975 473

## Beschreibung

Die vorliegende Erfindung bezieht sich auf einen Straßenfertiger gemäß dem Oberbegriff des Anspruchs 1.

In der Praxis werden Straßenfertiger verwendet, um mittels einer daran angeordneten Einbaubohle neue Fahrbahndecken zu verbauen. Das Einbaumaterial dafür kommt aus einem Gutbunker des Straßenfertigers, welcher in Einbaurichtung gesehen vorne am Straßenfertiger angeordnet ist. Über eine Materialfördereinrichtung wird das Einbaumaterial aus dem Gutbunker heraus nach hinten zur Einbaubohle transportiert, vor dieser mittels einer Verteilerschnecke ausgebreitet und schließlich unter der Einbaubohle mittels beheizter Verdichtungsaggregate zur neuen Fahrbahn verbaut.

Damit eine ebene Fahrbahn auf dem Untergrund, auf welchem sich der Straßenfertiger bewegt, verbaut werden kann, ist die Einbaubohle mittels höhenverstellbarer Bohlenholme am Chassis des Straßenfertigers befestigt. Die Nivellierung der Einbaubohle kann eine Steuereinrichtung des Straßenfertigers kontrolliert werden. Dabei hängt die Nivellierung der Einbaubohle von der Oberflächenbeschaffenheit des Untergrunds beziehungsweise von der Solldicke der zu verbauenden Fahrbahndecke ab.

Es ist bekannt, dass zum Nivellieren einer Einbaubohle eines Straßenfertigers am Straßenfertiger seitlich ein langgezogener starrer Messbalken befestigt ist, der eine Vielzahl von Sensoren einerseits über dem Untergrund, auf welchem sich der Straßenfertiger bewegt, sowie andererseits über der neu verlegten Einbauschicht hinter der Einbaubohle positioniert. Problematisch bei bekannten Messbalkenhalterungen ist, dass diese schwer und zeitaufwändig zusammenbaubar sind und insbesondere der Anbau am Straßenfertiger viel Geschick und mehrere Personen erfordert.

Beispielsweise zeigt DE 602 26 237 T2 eine Messbalkenvorrichtung mit übereinander angeordneten Balken, die teleskopartig entlang des Straßenfertigers ausziehbar sind, um seitlich des Straßenfertigers über dem Untergrund Sensoren für eine Höhenmessung zu positionieren. Die jeweiligen teleskopartigen Balkensegmente lassen sich an einer gewünschten Stelle mittels darauf vorgesehener Verankerungen fixieren. Außerdem können die jeweiligen Höhenpositionen der Sensoren eingestellt werden. Nachteilig daran ist, dass die teleskopartigen Messbalken ein hohes Gewicht aufbringen und daher nur an speziellen Straßenfertigertypen verwendbar sind. Hinzu kommt, dass für eine Montage am bzw. einen Abbau der Messbalkenvorrichtung vom Straßenfertiger mehrere Personen benötigt werden. Außerdem sind die Möglichkeiten bezüglich einer Höhenlagerung der Sensoren begrenzt. Schließlich werden die Sensoren am Messbalken durch unterschiedliche Klemmkräfte festgehalten, was von der Kraft des Einstellers abhängt, sodass ein erneutes Einstellen der Messbalkenvorrichtung Schwierigkeiten bereiten könnte.

US 5,975,473 A offenbart eine seitlich an einem Straßenfertiger befestigte Messbalkenvorrichtung. Die Messbalkenvorrichtung ist über gelenkige Schwenkarme an einem Bohlenholm des Straßenfertigers befestigt. Ferner umfasst die Messbalkenvorrichtung einen seitlich entlang des Straßenfertigers getragenen Messbalken mit einem Mittelbalken sowie an dessen Enden befestigten Erweiterungsbalken. Am Mittelbalken sowie an den Erweiterungsbalken sind jeweils Höhenmesssensoren angeordnet. Die jeweiligen Erweiterungsbalken können relativ zum Mittelbalken in horizontaler Ebene nach innen geschwenkt werden, sodass hinten am Straßenfertiger der am hinteren Erweiterungsbalken befestigte Sensor über der neu verbauten Einbauschicht hinter der Einbaubohle positionierbar ist. Bei dieser Messbalkenvorrichtung sind die jeweiligen gelenkig miteinander verbundenen Segmente mittels Gewindeschraubverbindungen gekoppelt. Ein Zusammenbau ist deshalb sehr aufwendig und zeitintensiv. Hinzu kommt, dass unterschiedliche Klemmkräfte an den jeweiligen Gewindeschraubverbindungen wirken, was letztendlich von der Kraft des Bedieners, der die Haltevorrichtung einstellt, abhängt. Dies erschwert die Montage und die Einstellung der Haltevorrichtung und macht sie nicht für jedermann gleichermaßen leicht montierbar. Außerdem kommt es nicht selten bei einer derart komplexen Messbalkenvorrichtung vor, dass einzelne Komponenten, insbesondere lose Schraubenhebel, Schrauben und Klammern auf der Baustelle verloren gehen. Schließlich sind bei dieser Messbalkenvorrichtung die Möglichkeiten zur Einstellung jeweiliger Höhenpositionen für die Sensoren beschränkt.

DE 691 26 017 T2 offenbart einen Straßenfertiger mit einem daran befestigten Messbalken, der starr ausgebildet ist und seitlich eines Bohlenholms des Straßenfertigers über dem Untergrund positioniert ist. Nachteilig daran ist, dass wegen der starren Ausbildung des Messbalkens sich dieser insbesondere nur an einer begrenzten Anzahl von Straßenfertigertypen einsetzen lässt.

Angesichts der herkömmlichen Lösungen gemäß dem Stand der Technik ist es die Aufgabe der Erfindung, einen Straßenfertiger mit einer Haltevorrichtung zur Verfügung zu stellen, welche sich für einen besonders flexiblen Einsatz zur Verwendung an unterschiedlichen Straßenfertigertypen eignet, sich weiterhin durch eine einfache und schnelle Montierbarkeit am Straßenfertiger auszeichnet, insgesamt ergonomisch bedienbar ist und darüber hinaus für eine Vielzahl von Halterungsmöglichkeiten für daran befestigter Module, insbesondere Messeinheiten, einsetzbar ist.

Einen Straßenfertiger mit einer derartigen Haltevorrichtung gibt Anspruch 1 her. Verbesserte Weiterbildungen der Erfindung sind Gegenstand der Unteransprüche.

Der erfindungsgemäße Straßenfertiger umfasst eine höhenverstellbare Einbaubohle zum Verlegen einer Einbauschicht und mindestens eine Haltevorrichtung zum Tragen und Positionieren mindestens einer Sensoreinheit. Die Haltevorrichtung umfasst mindestens ein Schwenkarmmodul zum Befestigen der Haltevorrichtung am Straßenfertiger, mindestens ein Tragarmmodul und mindestens ein Sensormodul, umfassend die Sensoreinheit. Bei der Erfindung sind das Tragarmmodul mittels einer ersten Klemmvorrichtung an dem Schwenkarmmodul und das Sensormodul mittels einer zweiten Klemmvorrichtung an dem Tragarmmodul befestigt.

Erfindungsgemäß sind die erste und die zweite Klemmvorrichtung jeweils für eine vorbestimmte Klemmkraft ausgebildet, wenn die jeweiligen Klemmvorrichtungen in einer geschlossenen Stellung sind. Bei der Erfindung üben somit die beiden Klemmvorrichtungen unabhängig von einer Betätigungskraft des Einstellers in der geschlossenen Stellung gleichbleibende Haltekräfte auf die zu haltenden Module aus. Daraus folgt, dass ein Überspannen an den Koppelstellen vermieden werden kann und sich die Klemmvorrichtungen immer unter Aufbringen ähnlicher Betätigungskräfte Öffnen und Schließen lassen. Dies stellt für die Haltevorrichtung, d.h. für deren Montierbarkeit am Straßenfertiger, Einstellbarkeit für die Sensoren und ihren modularen Zusammenbau insgesamt eine besonders ergonomische Handhabe sicher.

Außerdem ist die Haltevorrichtung, sozusagen als modularer Baukasten, hervorragend an unterschiedlichen Straßenfertigertypen für diverse Einsatzmöglichkeiten leicht ausbaufähig. Je nach Anwendungsfall lässt sie sich nämlich modulspezifisch an einem Straßenfertiger konfigurieren und kommt daher für zahlreiche Anwendungsfälle in Frage. Den unterschiedlichen Konfigurationsmöglichkeiten kommt bei der Erfindung insbesondere die ergonomische Handhabe der beiden Klemmvorrichtungen entgegen.

Durch den Einsatz gleichbleibender Klemmkräfte können insbesondere auch Beschädigungen an der Haltevorrichtung vermieden werden. Weiter kommt der Haltevorrichtung zugute, dass sie werkzeuglos montierbar ist. Schraubverbindungen, die bei bekannten Lösungen zum Einsatz kamen und Montagewerkzeug erforderten, kommen bei der Erfindung nicht vor.

Die beiden Klemmvorrichtungen bilden durchdachte Befestigungssysteme, wobei sie insbesondere jeweils als Schnellspannvorrichtungen ausgebildet sind. Dadurch ist die Haltevorrichtung besonders schnell am Straßenfertiger einsatzbereit, sodass Verlustzeiten für den Einbau erheblich reduziert werden können. Die jeweiligen Schnellspannvorrichtungen geben die jeweiligen Klemmkräfte vor, die aufzubringen sind, um daran Komponenten ordnungsgemäß zu sichern. Bei der Erfindung lassen sich die an der Haltevorrichtung eingesetzten Sensoreinheiten je nach Anwendungsfall beliebig bezüglich unterschiedlicher Messreferenzen beziehungsweise Messpositionen ausrichten. Dadurch kann die Haltevorrichtung je nach Kundenwunsch bei einer Vielzahl von Anwendungsfällen eingesetzt werden. Insbesondere können bei der Erfindung die jeweiligen Sensoren besonders vielfältig positioniert werden.

Ein Überspannen bzw. zu loses Festziehen der beiden Klemmvorrichtungen kann damit verhindert werden. Außerdem kann der Bediener an den Schnellspannern problemlos auf Sicht überprüfen, ob zu tragende Module daran ordnungsgemäß gehalten werden, d.h. ob die Schnellspanner sich in der geschlossenen Stellung befinden. Insbesondere kommt es dadurch nicht mehr vor, dass daran befestigte Sensoreinheiten während der Einbaufahrt herunterfallen bzw. verlorengehen.

Vorteilhaft ist es auch, wenn die vorbestimmte Klemmkraft unabhängig von einer Betätigungskraft an den jeweiligen Klemmvorrichtungen aufbringbar ist. Sind die jeweiligen Klemmvorrichtungen in der geschlossenen Stellung, dann kann der Einsteller auch davon ausgehen, dass die dadurch mittels der beiden Klemmvorrichtungen ausgeübten vorbestimmen Klemmkräfte für ein sicheres Halten zu befestigender Komponenten ausreichend sind.

Mühelos kann an den Klemmvorrichtungen zwischen einer geöffneten und einer geschlossenen Stellung insbesondere dann gewechselt werden, wenn die erste und/oder zweite Klemmvorrichtung ein Hebelklemmgetriebe umfasst. Über die Hebel- und Getriebewirkung können die Klemmvorrichtungen jeweils unter Aufbringen geringer Betätigungskräfte in die geschlossene und geöffnete Stellung gebracht werden. Das Hebelklemmgetriebe bietet sich insbesondere für die Befestigung sensibler und kostspieliger Module, beispielsweise für die Befestigung des Sensormoduls an.

Vorzugsweise umfasst das Hebelklemmgetriebe einen Bedienhebel zum Öffnen und Schließen der jeweiligen Klemmvorrichtung, einen Stützhebel sowie einen Klemmhebel, der die vorbestimme Klemmkraft zum Befestigen am Tragarmmodul aufbringt. Insbesondere kann der Bediener beim Öffnen und Schließen des Hebelklemmgetriebes am Bedienhebel, wenn dieser einen maximalen Druckpunkt erreicht, d.h. um einen vorbestimmten Winkel aus der geöffneten oder geschlossenen Stellung herausbewegt wurde, eine Maximalkraft spüren, wobei insbesondere beim Schließvorgang nach dem Erreichen dieser Kraft, das Hebelklemmgetriebe gewissermaßen selbstwirkend, jedenfalls ohne großen Kraftaufwand vollends in die geschlossene Stellung bringbar ist. Ebenso verhindert diese am Hebelklemmgetriebe vorliegende Maximalkraft um den Druckpunkt, dass sich das Hebelklemmgetriebe selbsttätig aus der geschlossenen Stellung öffnet.

Vorzugsweise umfasst die erste und/oder zweite Klemmvorrichtung mindestens einen Stützhaken, der als ein Widerlager für die Befestigung am Tragarmmodul ausgebildet ist. Der Stützhaken wirkt dabei insbesondere als Widerlager für das Hebelklemmgetriebe. Die jeweiligen Klemmvorrichtungen lassen sich damit besonders stabil, insbesondere rutschfest am Tragarmmodul befestigen.

Besonders fest kann das Tragarmmodul durch die jeweiligen Klemmvorrichtungen dann gehalten werden, wenn der Klemmhebel und der Stützhaken auf gegenüberliegenden Seiten des Tragarmmoduls daran gekoppelt sind, wenn die erste und/oder zweite Klemmvorrichtung geschlossen ist. Der Klemmhebel bildet dabei zusammen mit dem Stützhaken eine Kralle zur Aufnahme des Tragarmmoduls aus.

Gemäß einer besonders vorteilhaften Ausführung sind in einer geschlossenen Stellung der ersten und/oder zweiten Klemmvorrichtung folgende Drehpunkte des Hebelklemmgetriebes derart gelegt, dass ein zwischen dem Stützhebel und dem Bedienhebel vorliegender Drehpunkt zumindest teilweise auf einer gedachten Gerade zwischen einem an einer Aufnahme des Stützhebels liegenden Drehpunkt und einem zwischen dem Klemmhebel und dem Bedienhebel vorliegenden Drehpunkt liegt. Eine derartige Stellung jeweiliger Drehpunkte ermöglicht eine ausreichend große Selbsthemmungswirkung durch das jeweilige Hebelklemmgetriebe und verhindert damit ein selbsttätiges Öffnen des Hebelklemmgetriebes während der Einbaufahrt. Dies wird vorzugsweise dadurch begünstigt, wenn an einem der im Hebelklemmgetriebe ausgebildeten Hebel ein Anschlag befestigt ist, der in der geschlossenen Stellung des Hebelklemmgetriebes dafür sorgt, dass dieses sich nicht selbsttägig öffnet, sondern nur dann geöffnet werden kann, wenn eine bestimmte Betätigungskraft zum Öffnen am Bedienhebel aufgebracht wird. Außerdem verhindert der Anschlag an dem Hebel, dass das Hebelklemmgetriebe überspannt wird, wodurch gegebenenfalls daran befestigte Komponenten, insbesondere eine Sensoreinheit, zu Schaden kommen könnten. Der Anschlag kann dabei im Sinne der zuvor beschriebenen Maximalkraft am Druckpunkt verstanden werden.

Vorzugsweise ist an der ersten und/oder zweiten Klemmvorrichtung ein in auf eine vertikale Projektionsebene projiziert zur Horizontalen geneigt ausgerichteter Mittelbalken des Tragarmmoduls lösbar befestigbar. Der Mittelbalken bietet für die Haltevorrichtung eine stabile Basis, um daran weitere Balkensegmente sowie insbesondere das Sensormodul zu befestigen. Anhand der Klemmvorrichtungen kann der Mittelbalken zügig und vor allem positionsgenau von einem Bediener montiert werden, ohne dafür weiteres Personal zur Hilfeleistung zu benötigen.

Bevorzugterweise umfasst die Haltevorrichtung ferner mindestens einen Erweiterungsbalken für den Mittelbalken und mindestens eine Befestigungseinheit, die den Erweiterungsbalken an einem Ende des Mittelbalkens lösbar befestigt. Insbesondere sind der Mittelbalken und der Erweiterungsbalken mittels der Befestigungseinheit in vertikaler Projektionsebene betrachtet relativ zueinander in einem ersten Montagewinkel und in mindestens einem weiteren Montagewinkel miteinander verbindbar.

Vorzugsweise können der Mittelbalken und die an seinen Enden befestigten Erweiterungsbalken eine Stufenform ausbilden. Die Stufenform begünstigt es, dass eine Sensoreinheit über dem Untergrund, auf welchem sich der Straßenfertiger bewegt, in demselben Höhenabstand positionierbar ist wie eine andere Sensoreinheit über der neu verbauten Einbauschicht.

Der gestufte Aufbau bietet jedoch vor allem beim Einbau großer Einbaubreiten den wesentlichen Vorteil, dass die Haltevorrichtung nicht mit anderen Komponenten des Straßenfertigers, beispielsweise Bohlenausziehteilen, Kanalblechen und/oder Halterungen dafür kollidiert. Beim Einbau großer Einbaubreiten können Ausziehteile der Einbaubohle und/oder Kanalbleche, die bezüglich seitlichen Verteilerschnecken in Fahrtrichtung gesehen vor den Ausziehteilen angeordnet sind, mittels auskragenden Stützstangen vertikal und horizontal fixiert werden. Der Stufenaufbau der Haltevorrichtung ermöglicht dabei die Verwendung solcher Stützstangen, wobei die Haltevorrichtung selbst nicht durch die Stützstangen in ihrer Funktion gestört wird.

Vorzugsweise weist die erste und/oder zweite Klemmvorrichtung ein Halteteil und eine daran gekoppelte Drehscheibe auf, die relativ zueinander innerhalb eines vorgegebenen Winkels drehbar gelagert sind. Dadurch kann der Mittelbalken schräg zur Horizontalen am Straßenfertiger montiert werden, wodurch sich das Tragarmmodul hervorragend zur Befestigung einem Bohlenholm der Einbaubohle eignet. Weiterhin ermöglicht das Drehgelenk eine vertikal zum Untergrund ausgerichtete Positionierung des Sensormoduls, wenn es am schräg geneigten Mittelbalken befestigt ist.

Vorzugsweise ist an der ersten Klemmvorrichtung das Halteteil relativ zur Drehscheibe drehbar gelagert, wenn das Tragarmmodul durch die erste Klemmvorrichtung an dem Schwenkarmmodul befestigt ist, und an der zweiten Klemmvorrichtung die Drehscheibe relativ zum Halteteil drehbar gelagert, wenn das Sensormodul durch die zweite Klemmvorrichtung an dem Tragarmmodul befestigt ist. Dadurch lässt sich sowohl das Tragarmmodul in einem vorbestimmten Schwenkwinkel zur Horizontalen mittels der ersten Klemmvorrichtung als auch das Sensormodul in einem vorbestimmten Schwenkwinkel zur Horizontalen mittels der zweiten Klemmvorrichtung ausrichten. Die jeweiligen Klemmvorrichtungen können daher die jeweiligen Module vielseitig miteinander verbinden.

Insbesondere sind der Halteteil und die Drehscheibe relativ zueinander gegen Drehung fixierbar, so dass sich ein eingestellter Schwenkwinkel zwischen dem Halteteil und der Drehscheibe während der Einbaufahrt nicht verstellt. Dies gewährleistet einen stabilen Zusammenbau der Haltevorrichtung.

Vorzugsweise ist ein an der Drehscheibe der zweiten Klemmvorrichtung ausgebildetes Hebelklemmgetriebe ein Exzenterschnellspanner zur Aufnahme eines Sensorrohrs des Sensormoduls. Das Sensormodul lässt sich dadurch stabil, ohne daran große Kräfte aufbringen zu müssen an die zweite Klemmvorrichtung koppeln. Wegen des Exzenterschnellspanners erübrigt sich insbesondere eine Zuhilfenahme weiterer Werkzeuge, um daran das Sensormodul zu befestigen.

Eine besonders genaue und stabile Lagerung für die Sensoreinheit bietet das Sensormodul dann, wenn es eine Sensoraufnahme umfasst, wobei die Sensoreinheit vorzugswiese anhand einer Federnutverbindung in der Sensoraufnahme positionierbar ist. Die Sensoreinheit kann dadurch stets zielgenau in die Sensoraufnahme geführt und in dieser ordnungsgemäß befestigt werden.

Vorzugsweise ist die Sensoreinheit durch ein zum Sensormodul gehöriges Hebelklemmgetriebe am Sensormodul gehen Drehung fixierbar. Die Sensoren bleiben daher stets wie ursprünglich eingestellt ausgerichtet, was ein gleichbleibendes Messergebnis zur Folge hat.

Vorzugsweise ist das Hebelklemmgetriebe ein Exzenterschnellspanner, um die Sensoreinheit am Sensormodul zu befestigen. Mittels des Exzenterschnellspanners kann eine vorbestimmte Klemmkraft aufgebracht werden, sodass Schaden zuführende Kräfte, die beispielsweise durch zu starkes Anziehen beziehungsweise Überspannen einer Befestigung für die Sensoreinheit auftreten können, vermieden werden können.

Vorzugsweise ist ein zum Schwenkarmmodul gehöriges Hebelklemmgetriebe ein Exzenterspanner, durch welchen die erste Klemmvorrichtung am Schwenkarmmodul fixierbar ist. Dadurch kann die erste Klemmvorrichtung schnell und einfach am Schwenkarmmodul fixiert werden.

Gemäß einer weiteren Ausführungsform umfasst das Schwenkarmmodul zumindest abschnittsweise einen Führungsabschnitt und das Tragarmmodul einen Schiebeteil, welcher entlang des Führungsabschnitts verstellbar gelagert ist und an diesen mittels der ersten Klemmvorrichtung fixierbar ist. Ein derartiges Schwenkarmmodul bzw. Tragarmmodul lässt sich besonders gut in niedriger Höhe oberhalb des Untergrunds am Straßenfertiger befestigen und eignet sich hervorragend, um lediglich eine Sensoreinheit an der Haltevorrichtung vorzusehen.

Vorzugsweise ist der Schiebeteil ein Profilrohr und der Führungsabschnitt hohl zur Aufnahme des Profilrohrs ausgebildet. Dadurch lässt sich mühelos eine auskragende Länge seitlich des Straßenfertigers für die Haltevorrichtung einstellen.

Vorteilhafte Ausführungsformen der Erfindung werden anhand der folgenden Figuren erläutert. Es zeigen:
- Fig. 1: einen Straßenfertiger zum Verbau einer Fahrbahndecke mit einer Haltevorrichtung zum Tragen und Positionieren mehrerer Sensoren,
- Fig. 2: eine vergrößerte Darstellung eines Ausschnitts der Haltevorrichtung aus Fig. 1,
- Fig. 3: eine erste Klemmvorrichtung der Haltevorrichtung,
- Fig. 4: die erste Klemmvorrichtung aus Fig. 3 mit darin eingesetztem Mittelbalken,
- Fig. 5: die erste Klemmvorrichtung in einer geschlossenen Stellung mit daran befestigtem Mittelbalken,
- Fig. 6: eine zweite Klemmvorrichtung der Haltevorrichtung,
- Fig. 7: die zweite Klemmvorrichtung aus Figur 6 am Mittelbalken in einer geöffneten Stellung,
- Fig. 8: die zweite Klemmvorrichtung am Mittelbalken in einer geschlossenen Stellung,
- Fig. 9: eine Klemmvorrichtung insbesondere für den Einsatz zum Halten eines Sensorrohrs,
- Fig. 10: eine Schnittdarstellung der Klemmvorrichtung aus Fig. 9 zum Halten eines Sensorrohrs,
- Fig. 11: eine Drehklemmvorrichtung der ersten und zweiten Klemmvorrichtung,
- Fig. 12: eine Exzenter-Klemmvorrichtung zum Befestigen einer Sensoreinheit,
- Fig. 13: eine Hebelgetriebe-Klemmvorrichtung zum Befestigen der Sensoreinheit in einer geöffneten Stellung,
- Fig. 14: die Hebelgelenk-Klemmvorrichtung aus Fig. 13 in einer geschlossenen Stellung,
- Fig. 15: einen Schwenkarm der Haltevorrichtung zum Positionieren der ersten Klemmvorrichtung aus Fig. 3,
- Fig. 16: eine vergrößerte Darstellung einer oberen Klemmvorrichtung des Schwenkarms aus Fig. 15,
- Fig. 17: eine Haltevorrichtung für eine Sensoreinheit mit Schiebarmverbindung,
- Fig. 18: ein Ausschnitt der Schiebarmverbindung aus Fig. 17 und
- Fig. 19: die erste Klemmvorrichtung aus Fig. 17.

Gleiche Komponenten sind in den Figuren durchgängig mit gleichen Bezugszeichen versehen.

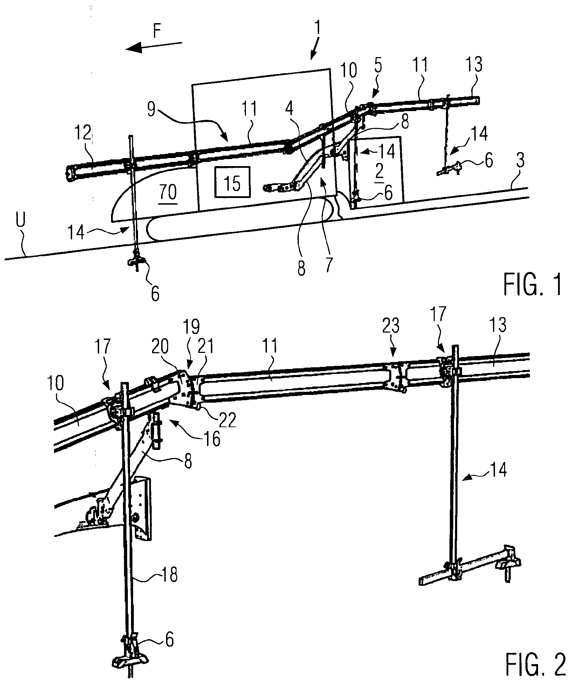

Fig. 1 zeigt einen Straßenfertiger 1 mit einer höheneinstellbaren Einbaubohle 2 zum Verlegen einer neuen Einbauschicht 3 auf einem Untergrund U. Der Straßenfertiger 1 hat einen in Fahrtrichtung F gesehen vorne angeordneten Gutbunker 70, aus welchem Einbaugut mittels einer nicht gezeigten Materialfördereinrichtung zum Verbau nach hinten zur Einbaubohle 2 transportiert wird.

Die Einbaubohle 2 umfasst einen Bohlenholm 4, an welchem eine Haltevorrichtung 5 befestigt ist. Die Haltevorrichtung 5 ist zum Tragen und Positionieren mehrerer Sensoreinheiten 6 ausgebildet. Die Haltevorrichtung 5 umfasst ein Schwenkarmmodul 7 zum Befestigen der Haltevorrichtung 5 am Straßenfertiger 1. Das Schwenkarmmodul 7 umfasst zwei Schwenkarme 8, die seitlich am Bohlenholm 4 befestigt sind. Ferner umfasst die Haltevorrichtung 5 ein Tragarmmodul 9 mit einem Mittelbalken 10 und an dessen Enden befestigten Erweiterungsbalken 11. Der Mittelbalken 10 wird von den beiden Schwenkarmen 8 geneigt zur Horizontalen seitlich am Straßenfertiger 1 getragen. Die beiden Erweiterungsbalken 11 an den Enden des Mittelbalkens 10 verlaufen zueinander parallel, so dass der Mittelbalken 10 zusammen mit dem Erweiterungsbalken 11 eine Stufenform ausbildet.

Ferner zeigt Fig. 1, dass in Fahrtrichtung F gesehen an einem vorderen Erweiterungsbalken 12, am Mittelbalken 10 sowie an einem hinteren Erweiterungsbalken 13 jeweils ein Sensormodul 14 befestigt ist. An jeweiligen Enden der Sensormodule 14 ist die Sensoreinheit 6 befestigt. Die beiden vorderen Sensormodule 14 sind für eine Abstandsmessung oberhalb des Untergrunds U, auf welchem sich der Straßenfertiger 1 bewegt, positioniert. Das am hinteren Erweiterungsbalken 13 befestigte Sensormodul 14 ist über der neuen Einbauschicht 3 positioniert, um zu dieser eine Abstandsmessung durchzuführen. Anhand der jeweiligen Abstandsmessungen kann eine im Straßenfertiger 1 ausgebildete Steuereinheit 15 eine automatische Nivellierung der Einbaubohle 2 durchführen, um selbst bei einer Fahrt auf einem unebenen Untergrund U eine ebene Einbauschicht 3 herzustellen.

Fig. 2 zeigt einen Ausschnitt der Haltevorrichtung 5 aus Fig. 1. An einem oberen Ende des Schwenkarms 8 ist eine erste Klemmvorrichtung 16 befestigt. Die erste Klemmvorrichtung 16 ist an einem oberen Abschnitt des Mittelbalkens 10 befestigt und hält den Mittelbalken 10 in einer geneigten Lage relativ zur Horizontalen.

In Fig. 2 ist ferner links neben der ersten Klemmvorrichtung 16 eine zweite Klemmvorrichtung 17 auf einer zur ersten Klemmvorrichtung 16 abgewandten Seite des Mittelbalkens 10 befestigt. Die zweite Klemmvorrichtung 17 ist dazu ausgebildet, das Sensormodul 14, insbesondere ein am Sensormodul 14 ausgebildetes Sensorrohr 18 zu halten, um die an einem unteren Ende des Sensorrohrs 18 befestigte Sensoreinheit 6 über dem Untergrund U zu positionieren. Weiter zeigt Fig. 2, dass neben dem Erweiterungsbalken 11 am hinteren Erweiterungsbalken 13 eine weitere zweite Klemmvorrichtung 17 befestigt ist, um ein, wie in Fig. 1 zu sehen ist, Sensormodul 14 hinter der Einbaubohle 2 zu positionieren.

Die in Fig. 2 gezeigte zweite Klemmvorrichtung 17 kann unabhängig von der Montageseite der ersten Klemmvorrichtung 16 an beiden Seiten des Mittelbalkens 10 und des Erweiterungsbalkens 11 festgeklemmt werden, d.h. relativ zum Straßenfertiger 1 betrachtet sowohl innen als auch außen am Mittelbalken 10 und/oder am Erweiterungsbalken 11.

Fig. 2 zeigt auch, dass der Mittelbalken 10 an seinem hinteren Ende mittels einer Befestigungseinheit 19 mit dem Erweiterungsbalken 11 verbunden ist. Die Befestigungseinheit 19 umfasst ein Einhängemaul 20, das am hinteren Ende des Mittelbalkens 10 ausgebildet ist, und eine Verriegelungsplatte 21, die an einem vorderen Ende des Erweiterungsbalkens 11 ausgebildet ist. An der Verriegelungsplatte 21 ist ein federbelasteter Sperrbolzen 22 beweglich angeordnet, um eine Verriegelung mit dem Einhängemaul 20 herzustellen.

In Fig. 2 sind der Erweiterungsbalken 11 und der hintere Erweiterungsbalken 13 mittels einer weiteren Befestigungseinheit 23 verbunden. Die weitere Befestigungseinheit 23 umfasst dieselben Komponenten wie die Befestigungseinheit 19, ist jedoch in einer anderen Verriegelungsposition verbunden, so dass der Erweiterungsbalken 11 mit dem hinteren Erweiterungsbalken 13 in horizontaler Ausrichtung positioniert zusammengebaut sind. Im Gegensatz dazu werden der Mittelbalken 10 und der Erweiterungsbalken 11 in einem stumpfen Montagewinkel über die Befestigungseinheit 19 aneinander gekoppelt.

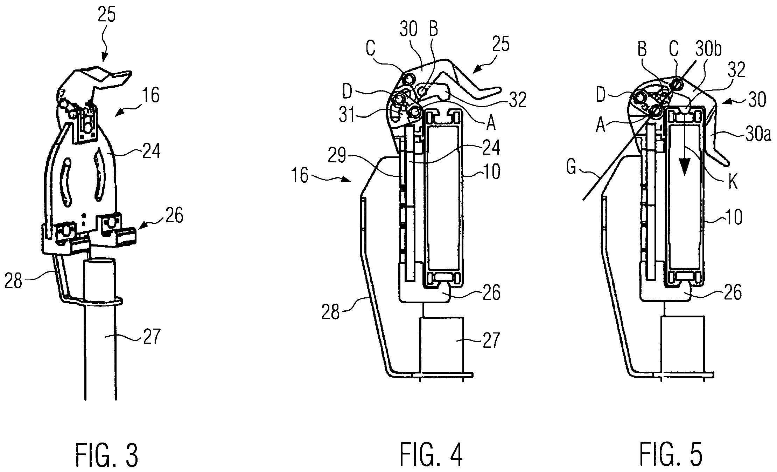

Fig. 3 zeigt die erste Klemmvorrichtung 16 in einer geöffneten Stellung. Die erste Klemmvorrichtung 16 umfasst ein Halteteil 24, ein Hebelklemmgetriebe 25 sowie zwei Stützhaken 26. Ebenso gut könnte die erste Klemmvorrichtung 16 allerdings auch nur einen Stützhaken 26 umfassen. Das Hebelklemmgetriebe 25 ist in Fig. 3 als Schnellspannvorrichtung ausgebildet, um den Mittelbalken 10 an der ersten Klemmvorrichtung 16 mittels einer vorbestimmten Klemmkraft zu befestigen. Die Stützhaken 26 wirken dabei als Widerlager mit dem Hebelklemmgetriebe 25 zusammen, so dass ein Verrutschen des Mittelbalkens 10 nicht möglich ist. Ferner umfasst die erste Klemmvorrichtung 16 ein Halterohr 27 mit einem Verbindungsbügel 28.

Fig. 4 zeigt einen Schnitt durch die erste Klemmvorrichtung 16, wobei in der ersten Klemmvorrichtung 16 der Mittelbalken 10 auf den Stützhaken 26 aufsitzt. Das Hebelklemmgetriebe 25 befindet sich in Fig. 4 noch im geöffneten Zustand. Fig. 4 zeigt auch, dass eine Drehscheibe 29 hinter dem Halteteil 24 positioniert ist, wobei das Halteteil 24, einschließlich der daran befestigten Stützhaken 26 und das Hebelklemmgetriebe 25 relativ zur Drehscheibe 29 innerhalb eines vorgegebenen Winkels drehbar gelagert sind. Dies hat zur Folge, dass der Mittelbalken 10 durch die erste Klemmvorrichtung 16 innerhalb des vorgegebenen Winkels geschwenkt und positioniert werden kann, wenn er in der ersten Klemmvorrichtung 16 befestigt wird. Dies hat weiter zur Folge, dass das an der ersten Klemmvorrichtung 16 vorgesehene Halteteil 24 relativ zur Drehscheibe 29 drehbar gelagert ist, wenn das Tragarmmodul 9 durch die erste Klemmvorrichtung 16 an dem Schwenkarmmodul 7 befestigt ist.

Gemäß Fig. 4 umfasst das Hebelklemmgetriebe 25 einen Bedienhebel 30 zum Öffnen und Schließen des Hebelklemmgetriebes 25, einen Stützhebel 31 sowie einen Klemmhebel 32, der eine vorbestimmte Klemmkraft K (siehe Figur 5) zum Befestigen der ersten Klemmvorrichtung 16 am Tragarmmodul 9 aufbringt. Im Hebelklemmgetriebe 25 sind der Bedienhebel 30, der Stützhebel 31 und der Klemmhebel 32 drehbar an Drehpunkten A, B, C, D miteinander gekoppelt.

Fig. 5 zeigt die erste Klemmvorrichtung 16 in einer geschlossenen Stellung, wobei die Stützhaken 26 den Mittelbalken 10 von unten und der Klemmhebel 32 den Mittelbalken 10 von oben, d.h. auf gegenüberliegenden Seiten des Mittelbalkens 10 festhalten. Weiter zeigt Fig. 5, dass der Bedienhebel 30 einen ersten Abschnitt 30a und einen zweiten Abschnitt 30b umfasst. Die beiden Bedienhebelabschnitte 30a, 30b sind derart geformt, dass sie im Wesentlichen einen 90°-Winkel einschließen. Dies hat zur Folge, dass sich der Bedienhebel 30 im geschlossenen Zustand des Hebelklemmgetriebes 25 derart um den Mittelbalken 10 legt, dass dadurch eine zusätzliche Fixierung für den Mittelbalken 10 zustande kommt. Insbesondere liegt dabei der erste Abschnitt 30a an einer dem Halteteil 24 abgewandten Seite des Mittelbalkens 10 an, um zu verhindern, dass der Mittelbalken 10 aus der ersten Klemmvorrichtung 16 herauskippt. Von oben wirkt auf den Mittelbalken 10 zusammen mit dem Klemmhebel 32 der zweite Abschnitt 30b zur verbesserten Fixierung.

In der geschlossenen Stellung gemäß Fig. 5 sind die Drehpunkte A, B, C der ersten Klemmvorrichtung 16 derart gelegt, dass der zwischen dem Stützhebel 31 und dem Bedienhebel 30 liegende Drehpunkt B auf einer gedachten Gerade G zwischen dem an einer Aufnahme des Stützhebels 31 liegenden Drehpunkt A und dem zwischen dem Klemmhebel 32 und dem Bedienhebel 30 vorliegenden Drehpunkt C liegt. Eine derartige Lage der Drehpunkte A, B, C sichert die geschlossene Stellung des Hebelklemmgetriebes 25 durch eine am Hebelklemmgetriebe wirkende Schließkraft, die größer ist als die vorbestimmte Klemmkraft, wodurch ein selbsttätiges Öffnen des Bedienhebels 30 nicht möglich ist. Dabei würde es genügen, dass der Drehpunkt B lediglich leicht, d.h. nicht durch dessen Zentrum von der gedachten Gerade G durchkreuzt wird, um eine ausreichend große Selbsthemmungswirkung mittels der Klemmvorrichtung 16 zu erzeugen, sodass sie stabil den Mittelbalken 10 halten kann.

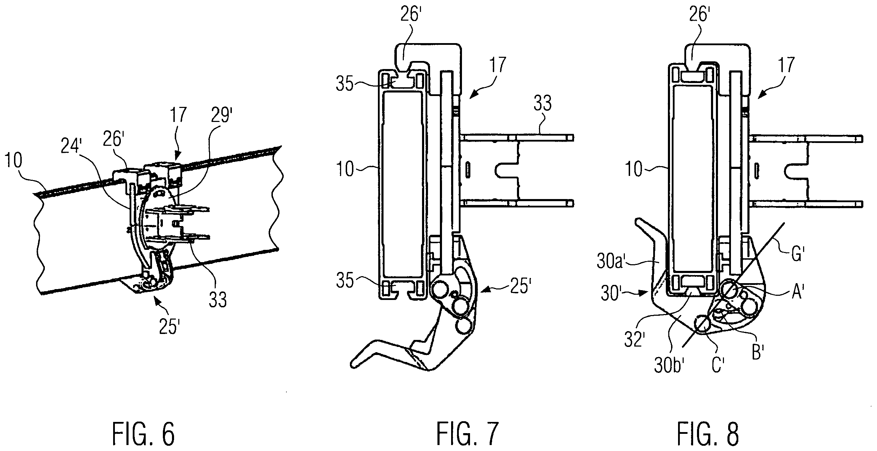

Fig. 6 zeigt die zweite Klemmvorrichtung 17 am Mittelbalken 10 befestigt, wobei die zweite Klemmvorrichtung 17 genauso gut an einem Erweiterungsbalken 11, 12, 13 befestigt werden könnte. Die zweite Klemmvorrichtung 17 besitzt einen ähnlichen Aufbau wie die erste Klemmvorrichtung 16. Es werden daher für vergleichbare Komponenten der beiden Klemmvorrichtungen 16, 17 bei der zweiten Klemmvorrichtung 17 entsprechende Bezugszeichen mit Apostroph verwendet.

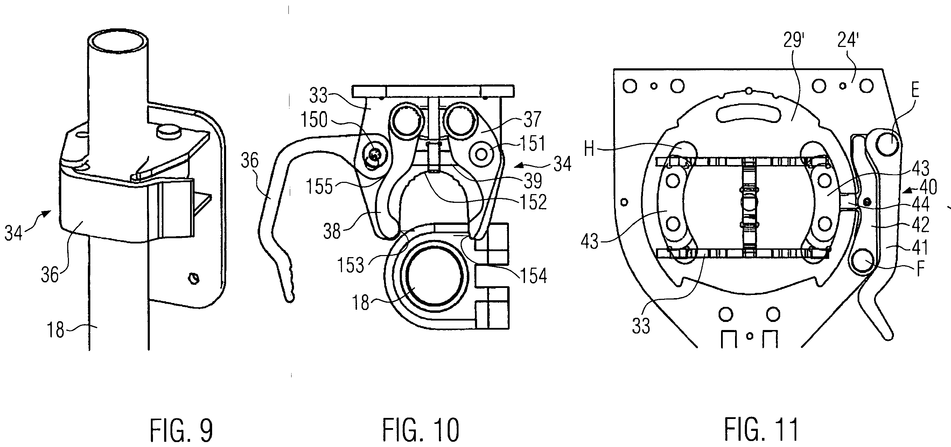

Bei der zweiten Klemmvorrichtung 17 aus Fig. 6 ist an der Drehscheibe 29' eine Halterung 33 befestigt. In der Halterung 33 kann ein zur zweiten Klemmvorrichtung 17 gehöriges Hebelklemmgetriebe 34 (siehe Fig. 9 und 10) befestigt werden, um damit das Sensormodul 14 an die zweite Klemmvorrichtung 17 zu koppeln.

In Fig. 6 ist die zweite Klemmvorrichtung 17 im Vergleich zur ersten Klemmvorrichtung 16 aus Fig. 3 auf den Kopf gedreht, so dass von oben die Stützhaken 26' und von unten das Hebelklemmgetriebe 25' am Mittelbalken 10 gekoppelt sind. In Fig. 6 ist an der zweiten Klemmvorrichtung 17 die Drehscheibe 29' relativ zum Halteteil 24' drehbar gelagert, um das Sensormodul 14 in einem vorgegebenen Winkel schwenkbar durch die zweite Klemmvorrichtung 17 an den Tragarmmodul 9 zu befestigen. Dadurch lässt sich insbesondere eine geneigte Lage des Mittelbalkens 10 ausgleichen, um das Sensormodul 14 in vertikaler Ausrichtung über dem Untergrund U bzw. über der Einbauschicht 3 zu tragen.

Fig. 7 zeigt einen Schnitt durch die zweite Klemmvorrichtung 17 relativ zum Mittelbalken 10. Durch die Stützhaken 26' lässt sich die zweite Klemmvorrichtung 17 hervorragend oben am Mittelbalken 10, der als Profilbalken ausgebildet ist, einhängen. Dafür umfasst der Mittelbalken 10 eine Vertiefung 35, die entlang der Oberseite des Mittelbalkens 10 sowie entlang der Unterseite des Mittelbalkens 10 verläuft. Sowohl die Stützhaken 26, 26' der ersten und zweiten Klemmvorrichtungen 16, 17 als auch die Klemmhebel 32, 32' können darin gut einhaken.

Fig. 8 zeigt die zweite Klemmvorrichtung 17 in einer geschlossenen Stellung am Mittelbalken 10 befestigt. In Fig. 8 sind sowohl die Stützhaken 26' als auch der Klemmhebel 32' in den Vertiefungen 35 der Ober- und Unterseiten des Mittelbalkens 10 aufgenommen. Der Bedienhebel 30' dient als zusätzliche Sicherung des Mittelbalkens 10 in der zweiten Klemmvorrichtung 17, wie dies bereits weiter oben im Zusammenhang mit der ersten Klemmvorrichtung 16 der Fig. 5 erläutert wurde. Ebenso liegen die Drehpunkt A', B', C' auf einer gedachten Geraden G', um das Hebelklemmgetriebe 25' der zweiten Klemmvorrichtung 17 gegen ein selbsttätiges Öffnen zu sichern.

Anhand Fig. 8 kann man gut erkennen, dass das Hebelklemmgetriebe 25' unten am Mittelbalken 10 eine Art U-förmige Aufnahme bildet, wenn der Bedienhebel 30 in der geschlossenen Stellung angekommen ist. Das Hebelklemmgetriebe 25', wie auch das Hebelklemmgetriebe 25 (siehe Fig. 5), leistet daher in doppelter Hinsicht eine stabile Fixierung des Mittelbalkens 10, nämlich einerseits eine vertikale Fixierung zwischen den Stützhaken 26, 26' und dem Klemmhebel 32, 32' und andererseits eine horizontale Fixierung insbesondere mittels der U-förmig gebildeten Aufnahme im Hebelklemmgetriebe 25, 25', wenn dieses in der geschlossenen Stellung ist. Die jeweiligen Klemmvorrichtungen 16, 17 können deshalb besonders zuverlässig am Mittelbalken 10 bzw. am Erweiterungsbalken 11, 12, 13 befestigt werden.

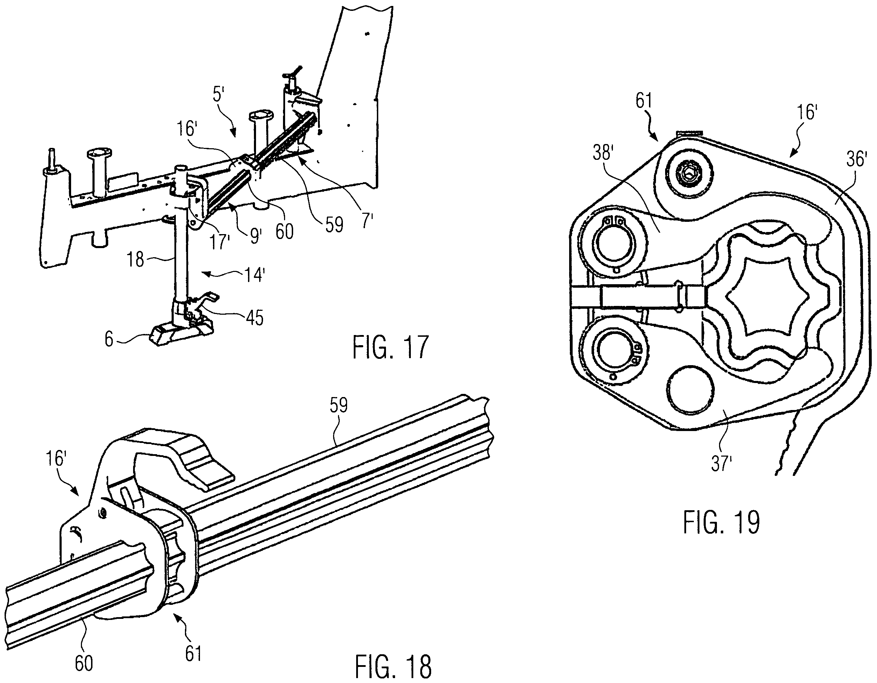

In Fig. 9 wird ein Hebelklemmgetriebe 34 gezeigt, das zur Fixierung des Sensorrohrs 18 verwendet werden kann und dafür als Exzenterklemmung ausgebildet ist. Das Hebelklemmgetriebe 34 wird von der Halterung 33 der zweiten Klemmvorrichtung 17 getragen. Weiterhin ist es vorstellbar, dass das in Fig. 9 gezeigte Hebelklemmgetriebe 34 an einer anderen Stelle der Haltevorrichtung 5 zum Einsatz kommen kann, beispielsweise als zweites Hebelklemmgetriebe 17' gemäß den Fig. 17 bis 19.

Fig. 10 zeigt einen Schnitt durch das Hebelklemmgetriebe 34 aus Fig. 9. Das Hebelklemmgetriebe 34 ist in Fig. 10 als Exzenterschnellspanner ausgebildet und befindet sich in Fig. 10 in einer geöffneten Stellung. Das Hebelklemmgetriebe 34 umfasst einen Bedienhebel 36 zum Öffnen und Schließen des Hebelklemmgetriebes 34, einen Stützhebel 37 (Im Folgenden auch Haltehebel 37) sowie einen Klemmhebel 38, der eine vorbestimmte Klemmkraft zum Befestigen des Sensormoduls 14 an der zweiten Klemmvorrichtung 17 und somit am Tragarmmodul 9 aufbringt.

Der Bedienhebel 36 ist als Exzenterhebel ausgebildet, wobei durch dessen Drehung der Klemmhebel 38 gegen das Sensorrohr 18 gedrückt werden kann, wenn dieses innerhalb des Hebelklemmgetriebes 34 positioniert ist. Ferner ist der Bedienhebel 36 derart geformt, dass er sich im geschlossenen Zustand des Hebelklemmgetriebes 34 (siehe Fig. 9) derart um das Sensorrohr 18 legt, dass dieses hinsichtlich aller Richtungen innerhalb des Hebelklemmgetriebes 34 fixiert ist. Um das Hebelklemmgetriebe 34, insbesondere den Haltehebel 37 relativ zum Klemmhebel 38 in einer geöffneten Stellung zu halten, ist zwischen dem Stützhebel und dem Klemmhebel 38 eine Zugstange 39 ausgebildet.

In Fig. 10 wirkt der Bedienhebel 36 über eine Kontaktstelle 155 direkt auf den Klemmhebel 38, um diesen gegen das Sensorrohr 18 zu drücken. Der Bedienhebel 36 ist an einem Bolzen 150 befestigt, der über die Zugstange 39 mit einem Bolzen 151 des Haltehebels 37 verbunden ist. Bei Betätigung des Bedienhebels 36 zieht der Bolzen 150 über die Zugstange 39 am Bolzen 151, sodass dadurch sowohl der Klemmhebel 38 über die Exzenterkopplung gegen das Sensorrohr 18 gedrückt als auch der Haltehebel 37 gegen das Sensorrohr 18 gezogen wird.

In Fig. 10 verfügen der Klemmhebel 38 und der Haltehebel 37 jeweils über vordere Kontaktstellen 153, 154, mittels welchen das Sensorrohr 18 in der geschlossenen Stellung des Hebelklemmgetriebes 34 gegen mindestens eine als Gegenlager ausgebildete Kontaktstelle 152 der Halterung 33 gedrückt wird.

Das Hebelklemmgetriebe 34 ist selbstausrichtend bezüglich des Klemmrohrs 18 ausgebildet. Dadurch können Toleranzen ausgeglichen werden und es können unterschiedliche Sensorrohrgeometrien fixiert werden.

Fig. 11 zeigt ein weiteres Hebelklemmgetriebe 40, das sowohl an der ersten als auch an der zweiten Klemmvorrichtung 16, 17 ausgebildet sein kann, um den Halteteil 24, 24' relativ zur Drehscheibe 29, 29' gegen Drehung zu fixieren, wenn es in einer geschlossenen Stellung ist, sowie eine relative Drehbarkeit zwischen der Drehscheibe 29, 29' und dem Halteteil 24, 24' zu gestatten, wenn es in einer geöffneten Stellung ist. In Fig. 11 ist das Hebelklemmgetriebe 40 als Exzenterklemmung ausgebildet.

Das Hebelklemmgetriebe 40 aus Fig. 11 umfasst einen Bedienhebel 41, einen Stützhebel 42 und ein Klemmlager 43. Der Bedienhebel 41 ist als Exzenterhebel ausgebildet, der um einen Drehpunkt E schwenkbar gelagert ist. Der Stützhebel 42 ist schwenkbar um einen Drehpunkt F gelagert. Der Bedienhebel 41 und der Stützhebel 42 liegen nebeneinander, wobei deren Drehpunkte E, F an zueinander abgewandten Enden der Hebel 41, 42 positioniert sind. Der Stützhebel 42 ist mittels eines Bolzens 44 mit dem Klemmlager 43 verbunden. Eine Drehbewegung des Bedienhebels 41, um das Hebelklemmgetriebe 40 zu schließen, wird über den Exzenter am Drehpunkt E auf den Stützhebel 42 und von diesem über den Bolzen 44 auf das Klemmlager 43 übertragen, um die Drehscheibe 29' drehfest am Halteteil 24' zu fixieren.

In Fig. 11 ist das Klemmlager 43 in Ausschnitten H des Halteteils 24' aufgenommen. Das Klemmlager 43 hat eine Mehrfachfunktion. Erstens lagert es die Drehscheibe 29' an dem Halteteil 24'. Zweitens wirkt es zusammen mit den Ausschnitten H des Halteteils 24' als eine Drehwinkelbegrenzung für die Drehscheibe 29' relativ zum Halteteil 24'. Drittens lässt sich das Klemmlager 43 durch Schließen des Bedienhebels 41 derart verstellen, dass die Drehscheibe 29' geklemmt ist, wodurch die Drehscheibe 29' relativ zum Halteteil 24' drehfest fixiert ist.

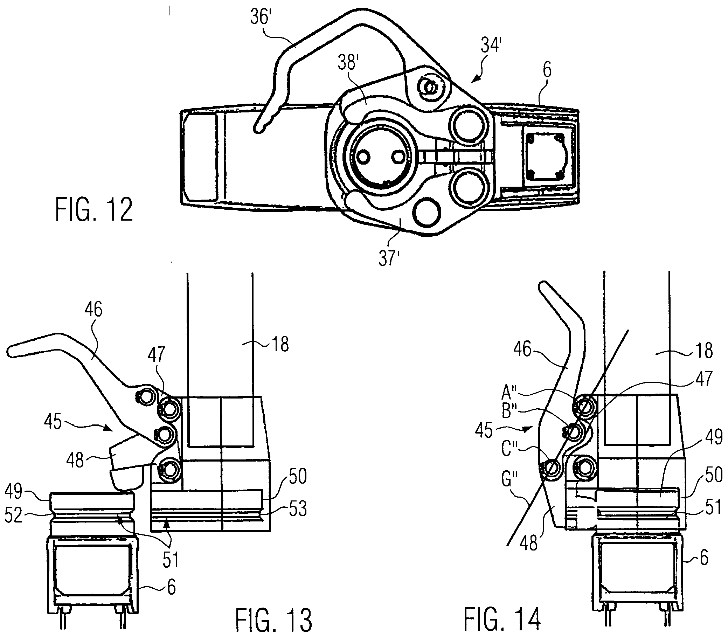

Fig. 12 zeigt ein Hebelklemmgetriebe 34', das ähnlich als Exzenterklemmung ausgebildet ist wie das zuvor in Zusammenhang mit Fig. 10 gezeigte Hebelklemmgetriebe 34, allerdings an einer anderen Position der Haltevorrichtung 5 zum Einsatz kommt. Das Hebelklemmgetriebe 34' ist in der Haltevorrichtung 5 dafür vorgesehen, die Sensoreinheit 6 an einem unteren Ende des Sensorrohrs 18 zu befestigen, um die Sensoreinheit 6 über dem Untergrund U bzw. über der Einbauschicht 3 zu positionieren. Zum Fixieren der Sensoreinheit 6 am Sensorrohr 18 umfasst das Hebelklemmgetriebe 34' einen Bedienhebel 36', einen Haltehebel 37' und einen Klemmhebel 38'. Wie im Hebelklemmgetriebe 34 ist auch im Hebelklemmgetriebe 34' der Bedienhebel 36' als Exzenterhebel ausgebildet, um durch Kräfteübertragung auf den Klemmhebel 38' durch diesen eine vorbestimmte Klemmkraft auf die Sensoreinheit 6 zu dessen Fixierung am Sensorrohr 18 aufzubringen. Insbesondere kann das Hebelklemmgetriebe 34' mit einer ähnlichen Federnutverbindung, wie sie später noch im Zusammenhang mit der Fig. 13 und der Fig. 14 beschrieben wird, die Sensoreinheit 6 befestigen. Dabei befindet sich wie in den Figuren 13 und 14 eine Nut am Sensorkopf der Sensoreinheit 6.

In diesem Zusammenhang wäre es auch vorstellbar, das Hebelklemmgetriebe 34 aus den Figuren 9 und 10 mit einer Federnutverbindung auszustatten, wobei am Sensorrohr 18 eine Vielzahl von Nuten in regelmäßigen Abständen ausgebildet sind, um das Sensorrohr 18 diesbezüglich in verschiedenen Höhenlagen positionieren zu können. Durch den mittels der Federnutverbindung zusätzlich erzielbaren Formschluss ließen sich die Klemmkräfte an dem Hebelklemmgetriebe 34 reduzieren.

Fig. 13 zeigt ein alternatives Hebelklemmgetriebe 45 zum Hebelklemmgetriebe 34' aus Fig. 12, um die Sensoreinheit 6 am untern Ende des Sensorrohrs 18 zu befestigen. Das Hebelklemmgetriebe 45 in Fig. 13 umfasst einen Bedienhebel 46, einen Stützhebel 47 und einen Klemmhebel 48, der einen Kopf 49 der Sensoreinheit 6 in einer Sensoraufnahme 50, die am unteren Ende des Halterohrs 18 ausgebildet ist, sichert. Fig. 13 zeigt auch, dass die Sensoreinheit 6 mittels einer Federnutverbindung 51 in der Sensoraufnahme 50 gesichert werden kann. Vorzugsweise ist dafür am Sensorkopf 49 eine zumindest abschnittsweise, jedoch bevorzugt ringsum verlaufende Nut 52 und innerhalb der Sensoraufnahme 50 eine dementsprechende Feder 53 ausgebildet.

Fig. 14 zeigt das Hebelklemmgetriebe 45 aus Fig. 13 in einer geschlossenen Stellung. In der geschlossenen Stellung hält der Klemmhebel 48 den Sensorkopf 49 in der Sensoraufnahme 50 fest. Für eine vertikale Fixierung der Sensoreinheit 6 innerhalb der Sensoraufnahme 50 sorgt insbesondere die Federnutverbindung 51. Fig. 14 zeigt auch, dass die Drehpunkte A". B", C" gemeinsam auf einer gedachten Geraden G" liegen, wodurch im Hebelklemmgetriebe 45 eine vorbestimmte Schließkraft wirkt, die vorzugsweise größer ist als die vorbestimmte Klemmkraft, und somit ein selbsttätiges Öffnen des Hebelklemmgetriebes 45 verhindert werden kann.

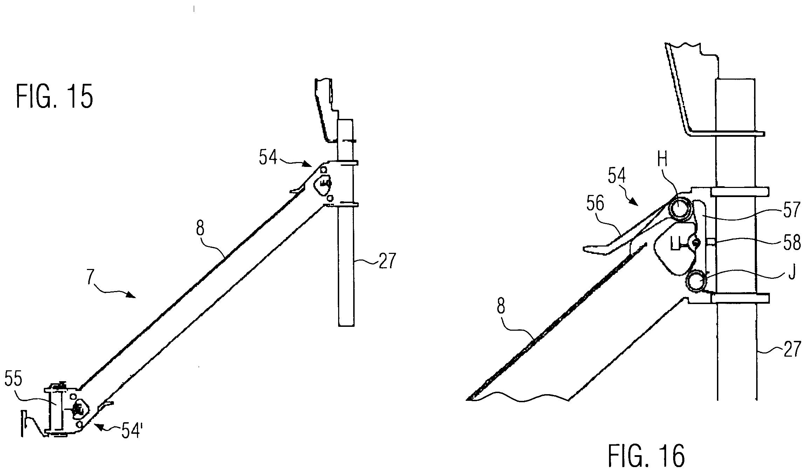

Fig. 15 zeigt einen Schwenkarm 8 des Schwenkarmmoduls 7, wobei der Schwenkarm 8 an seinem oberen Ende ein Hebelklemmgetriebe 54 und an seinem unteren Ende ein weiteres Hebelklemmgetriebe 54' aufweist. Das obere Hebelklemmgetriebe 54 ist dazu ausgebildet, das Halterohr 27 der ersten Klemmvorrichtung 16 zu fixieren. Das untere Hebelklemmgetriebe 54' fixiert den Schwenkarm 8 an einem Lagerbolzen 55, der vorzugsweise am Bohlenholm 4 des Straßenfertigers 1 ausgebildet ist.

Fig. 16 zeigt das Hebelklemmgetriebe 54 aus Fig. 15 im Schnitt in vergrößerter Darstellung. Das Hebelklemmgetriebe 54 umfasst einen Bedienhebel 56 der drehbar um einen Drehpunkt H gelagert ist und an diesem eine Exzenterform aufweist. Ferner umfasst das Hebelklemmgetriebe 54 einen Klemmhebel 57 mit einem daran befestigten Klemmstift 58. Der Klemmhebel 57 ist drehbar um einen Drehpunkt I gelagert und wirkt mit der am Ende des Bedienhebels 56 ausgebildeten Exzenterform an seinem vom Drehpunkt I entfernt vorgesehenen Ende zusammen. In der geschlossenen Stellung, die in Fig. 16 zu sehen ist, drückt der Bedienhebel 56 mittels seines Exzenters auf den Klemmhebel 57, der dadurch in Richtung zum Halterohr 27 um den Drehpunkt I geschwenkt wird. Infolgedessen drückt der Klemmstift 58 gegen das Halterohr 27 und fixiert dieses relativ zum Schwenkarm 8.

Fig. 17 zeigt eine weitere Haltevorrichtung 5', die zusätzlich oder als Ersatz für die Haltevorrichtung 5 am Straßenfertiger 1 lösbar befestigt ist. Die Haltevorrichtung 5' umfasst ein Schwenkarmmodul 7' zum Befestigen der Haltevorrichtung 5' am Straßenfertiger 1, ein Tragarmmodul 9' und ein Sensormodul 14'. Das Tragarmmodul 9' ist mittels einer ersten Klemmvorrichtung 16' an dem Schwenkarmmodul 7' und das Sensormodul 14' mittels einer zweiten Klemmvorrichtung 17' an dem Tragarmmodul 9' befestigt. In Fig. 17 umfasst das Schwenkarmmodul 7' einen Führungsabschnitt 59 und das Tragarmmodul 9' einen Schiebeteil 60. Der Schiebeteil 60 ist entlang des Führungsabschnitts 59 verstellbar gelagert und an diesem mittels der ersten Klemmvorrichtung 16' fixierbar.

Fig. 18 zeigt den Führungsabschnitt 59, den Schiebeteil 60 sowie die erste Klemmvorrichtung 16' in vergrößerter Darstellung. In Fig. 18 ist der Schiebeteil 60 als Profilrohr ausgebildet und der Führungsabschnitt 59 bildet ein ähnliches Profil gemäß dem Schiebeteil 60 aus. In Fig. 18 umfasst die erste Klemmvorrichtung 16' ein Hebelklemmgetriebe 61, das ähnlich wie das Hebelklemmgetriebe 34' aus Fig. 12 ausgebildet ist.

Fig. 19 zeigt einen Schnitt durch die erste Klemmvorrichtung 16' aus Fig. 18. Das Hebelklemmgetriebe 61 übt mittels eines Bedienhebels 36', der als Exzenterhebel ausgebildet ist, auf einen Haltehebel 37' und einen Klemmhebel 38' eine vorbestimmte Klemmkraft aus, und hält damit den Schiebeteil 60 relativ zum Führungsabschnitt 59 fest.

Bei der Erfindung lässt sich die Haltevorrichtung 5, 5' besonders vielseitig und ergonomisch am Straßenfertiger 1 befestigen. Obwohl bei der Erfindung auf die jeweiligen Klemmvorrichtungen keine großen Betätigungskräfte aufgebracht werden müssen, halten diese daran gekoppelte Komponenten zuverlässig fest. Insbesondere benötigt ein Bediener zur Montage bzw. zur Demontage der jeweiligen Haltevorrichtung 5, 5' keine zusätzlichen Werkzeuge, so dass ihm die Arbeit auf der Baustelle erleichtert werden kann. Außer der Verwendung der Haltevorrichtung 5, 5' an dem Straßenfertiger 1, eignet sie sich auch zur Befestigung an anderen Fahrzeugen, insbesondere an einem Beschickerfahrzeug für einen Straßenfertiger.

## Patentansprüche

1. Straßenfertiger (1) mit einer höheneinstellbaren Einbaubohle (2) zum Verlegen einer Einbauschicht (3) und mindestens einer Haltevorrichtung (5) zum Tragen und Positionieren mindestens einer Sensoreinheit (6), wobei die Haltevorrichtung (5) mindestens ein Schwenkarmmodul (7) zum Befestigen der Haltevorrichtung (5) am Straßenfertiger (1), mindestens ein Tragarmmodul (9) und mindestens ein Sensormodul (14), umfassend die Sensoreinheit (6), aufweist, wobei das Tragarmmodul (9) mittels einer ersten Klemmvorrichtung (16) an dem Schwenkarmmodul (7) und das Sensormodul (14) mittels einer zweiten Klemmvorrichtung (17) an dem Tragarmmodul (9) befestigt sind, **dadurch gekennzeichnet, dass** die erste und die zweite Klemmvorrichtung (16, 17) jeweils für eine vorbestimmte Klemmkraft (K) ausgebildet sind, wenn die jeweiligen Klemmvorrichtungen (16, 17) in einer geschlossenen Stellung sind.

2. Straßenfertiger nach Anspruch 1, **dadurch gekennzeichnet, dass** die erste und die zweite Klemmvorrichtung (16, 17) jeweils Schnellspannvorrichtungen sind.

3. Straßenfertiger nach einem der vorigen Ansprüche, **dadurch gekennzeichnet, dass** die vorbestimmte Klemmkraft (K) unabhängig von einer Betätigungskraft an den jeweiligen Klemmvorrichtungen (16, 17) ist.

4. Straßenfertiger nach einem der vorigen Ansprüche, **dadurch gekennzeichnet, dass** die erste und/oder zweite Klemmvorrichtung (16, 17) ein Hebelklemmgetriebe (25, 25') umfasst.

5. Straßenfertiger nach Anspruch 4, **dadurch gekennzeichnet, dass** das Hebelklemmgetriebe (25, 25') einen Bedienhebel (30. 30') zum Öffnen und Schließen der jeweiligen Klemmvorrichtung (16, 17), einen Stützhebel (31, 31') sowie einen Klemmhebel (32, 32') umfasst, der die vorbestimmte Klemmkraft (K) zum Befestigen am Tragarmmodul (9) aufbringt.

6. Straßenfertiger nach Anspruch 5, **dadurch gekennzeichnet, dass** die erste und/oder zweite Klemmvorrichtung (16, 17) mindestens einen Stützhaken (26, 26') umfasst, der als ein Widerlager für die Befestigung am Tragarmmodul (9) ausgebildet ist.

7. Straßenfertiger nach Anspruch 6, **dadurch gekennzeichnet, dass** der Klemmhebel (32, 32') und der Stützhaken (26, 26') auf gegenüberliegenden Seiten des Tragarmmoduls (9) daran gekoppelt sind, wenn die erste und/oder zweite Klemmvorrichtung (16, 17) geschlossen ist.

8. Straßenfertiger nach einem der Ansprüche 4 bis 7, **dadurch gekennzeichnet, dass** in einer geschlossenen Stellung der ersten und/oder zweiten Klemmvorrichtung (16, 17) folgende Drehpunkte des Hebelklemmgetriebes (25, 25') derart gelegt sind, dass ein zwischen dem Stützhebel (31, 31') und dem Bedienhebel (30, 30') vorliegender Drehpunkt (B,B') zumindest teilweise auf einer gedachten Gerade (G, G') zwischen einem an einer Aufnahme des Stützhebels (31, 31') liegenden Drehpunkt (A, A') und einem zwischen dem Klemmhebel (32, 32') und dem Bedienhebel (30, 30') vorliegenden Drehpunkt (C, C') liegt.

9. Straßenfertiger nach einem der vorigen Ansprüche, **dadurch gekennzeichnet, dass** an der ersten und/oder zweiten Klemmvorrichtung (16, 17) ein in vertikaler Projektionsebene betrachtet schräg ausgerichteter Mittelbalken (10) des Tragarmmoduls (9) befestigbar ist und/oder die erste und/oder zweite Klemmvorrichtung (16, 17) ein Halteteil (24, 24') und eine daran gekoppelte Drehscheibe (29, 29') aufweist, die relativ zueinander innerhalb eines vorgegebenen Winkels drehbar gelagert sind.

10. Straßenfertiger nach Anspruch 9, **dadurch gekennzeichnet, dass** an der ersten Klemmvorrichtung (16) das Halteteil (24) relativ zur Drehscheibe (29) drehbar gelagert ist, wenn das Tragarmmodul (9) durch die erste Klemmvorrichtung (16) an dem Schwenkarmmodul (7) befestigt ist, und an der zweiten Klemmvorrichtung (17) die Drehscheibe (29') relativ zum Halteteil (24') drehbar gelagert ist, wenn das Sensormodul (14) durch die zweite Klemmvorrichtung (17) an dem Tragarmmodul (9) befestigt ist.

11. Straßenfertiger nach Anspruch 9 oder 10, **dadurch gekennzeichnet, dass** der Halteteil (24, 24') und die Drehscheibe (29, 29') relativ zueinander gegen Drehung fixierbar sind.

12. Straßenfertiger nach einem der Ansprüche 9 bis 11, **dadurch gekennzeichnet, dass** ein an der Drehscheibe (29') der zweiten Klemmvorrichtung (17) ausgebildetes Hebelklemmgetriebe (40) ein Exzenterschnellspanner zur Aufnahme eines Sensorrohrs (18) des Sensormoduls (14) ist.

13. Straßenfertiger nach einem der vorigen Ansprüche, **dadurch gekennzeichnet, dass** das Sensormodul (14) eine Sensoraufnahme (50) umfasst, wobei die Sensoreinheit anhand einer Federnutverbindung (51) in der Sensoraufnahme (50) positionierbar ist und/oder die Sensoreinheit (6) an einem zum Sensormodul (14) gehörigen Hebelklemmgetriebe (34', 45) am Sensormodul (14) gegen Drehung fixierbar ist.

14. Straßenfertiger nach einem der Ansprüche 1 bis 4, **dadurch gekennzeichnet, dass** das Schwenkmodul (7') zumindest abschnittsweise einen Führungsabschnitt (59) aufweist und das Tragarmmodul (9') einen Schiebeteil (60) umfasst, welcher entlang des Führungsabschnitts (59) verstellbar gelagert ist und an diesen mittels der ersten Klemmvorrichtung (16') fixierbar ist.

15. Straßenfertiger nach Anspruch 14, **dadurch gekennzeichnet, dass** der Schiebeteil (60) ein Profilrohr ist und der Führungsabschnitt (59) hohl zur Aufnahme des Profilrohrs ausgebildet ist.

## Claims

1. Road paver (1) with a height-adjustable paving screed (2) for installing a road surface layer (3) and at least one holding device (5) for carrying and positioning of at least one sensor unit (6), wherein the holding device (5) has at least one swivel arm module (7) for fastening of the holding device (5) on the road paver (1), at least one carrier arm module (9) and at least one sensor module (14) comprising the sensor unit (6), wherein the carrier arm module (9) is fastened on the swivel arm module (7) by means of a first clamping device (16) and the sensor module (14) is fastened on the carrier arm module (9) by means of a second clamping device (17), **characterized in that** the first and the second clamping device (16, 17) are each formed for a predetermined clamping force (K) when the respective clamping devices (16, 17) are in a closed position.

2. Road paver according to Claim 1, **characterized in that** the first and the second clamping device are each quick-release devices.

3. Road paver according to one of the preceding claims, **characterized in that** the predetermined clamping force (K) is independent of an actuating force on the respective clamping devices (16, 17).

4. Road paver according to one of the preceding claims, **characterized in that** the first and/or second clamping device (16, 17) comprises a lever clamping gear mechanism (25, 25').

5. Road paver according to Claim 4, **characterized in that** the lever clamping gear mechanism (25, 25') comprises an actuating lever (30, 30') for opening and closing the respective clamping device (16, 17), a supporting lever (31, 31') as well as a clamping lever (32, 32') that applies the predetermined clamping force (K) for fastening on the carrier arm module (9).

6. Road paver according to Claim 5, **characterized in that** the first and/or second clamping device (16, 17) comprises at least one supporting hook (26, 26') that is formed as an abutment for the fixation on the carrier arm module (9).

7. Road paver according to Claim 6, **characterized in that** the clamping lever (32, 32') and the supporting hook (26, 26') are coupled to the carrier arm module (9) on opposite sides of said module when the first and/or second clamping device (16, 17) is closed.

8. Road paver according to one of the Claims 4 to 7, **characterized in that** in a closed position of the first and/or second clamping device (16, 17) the following turning points of the lever clamping gear mechanism (25, 25') are laid in a way that a turning point (B, B') located between the supporting lever (31, 31') and the actuating lever (30, 30') is located at least partially on an imaginary straight line (G, G') between a turning point (A, A'), which is located on an inlet of the supporting lever (30, 31'), and a turning point (C, C') that exists between the clamping lever (32, 32') and the actuating lever (30, 30').

9. Road paver according to one of the preceding claims, **characterized in that** a central beam (10) of the carrier arm module (9), which is aligned obliquely when viewed in the vertical projection plane, can be fastened on the first and/or second clamping device (16, 17) and/or that the first and/or second clamping device (16, 17) has a holding part (24, 24') and a rotary disc (29, 29') coupled to it that are installed rotatably in relation to one another within a predetermined angle.

10. Road paver according to Claim 9, **characterized in that** on the first clamping device (16) the holding part (24) is installed rotatably in relation to the rotary axis (29) when the carrier arm module (9) is fastened on the swivel arm module (7) by means of the first clamping device (16) and that on the second clamping device (17) the rotary disc (29') is installed rotatably in relation to the holding part (24') when the sensor module (14) is fastened on the carrier arm module (9) by means of the second clamping device (17).

11. Road paver according to Claim 9 or 10, **characterized in that** the holding part (24, 24') and the rotary disc (29, 29') can be fixed against rotation in relation to one another.

12. Road paver according to one of the Claims 9 to 11, **characterized in that** a lever clamping gear mechanism (40) that is formed on the rotary disc (29') of the second clamping device (17) is an eccentric quick-release device for absorbing a sensor tube (18) of the sensor module (14).

13. Road paver according to one of the preceding claims, **characterized in that** the sensor module (14) comprises a sensor inlet (50), wherein the sensor unit can be positioned in the sensor inlet (50) by means of a tongue and groove connection (51) and/or wherein the sensor unit (6) can be fixed against rotation on a lever clamping gear mechanism (34', 45) associated with the sensor module (14) on the sensor module (14).

14. Road paver according to one of the Claims 1 to 4, **characterized in that** the swivel module (7') has a guiding section (59) at least in sections and that the carrier arm module (9') comprises a sliding part (60) that is installed adjustably along the guiding section (59) and that can be fixed on said guiding section by means of the first clamping device (16').

15. Road paver according to Claim 14, **characterized in that** the sliding part (60) is a profile tube and that the guiding section (59) is hollow for absorbing the profile tube.

## Revendications

1. Finisseur de route (1) comprenant une table de pose de revêtement (2) réglable en hauteur pour la pose d'une couche de revêtement (3), et au moins un dispositif de support (5) pour supporter et positionner au moins une unité de capteur (6), finisseur de route dans lequel le dispositif de support (5) présente au moins un module de bras pivotant (7) pour la fixation du dispositif de support (5) au finisseur de route (1), au moins un module de bras de support (9) et au moins un module de capteur (14), qui comprend l'unité de capteur (6), et
dans lequel le module de bras de support (9) est fixé au module de bras pivotant (7) à l'aide d'un premier dispositif de serrage (16), et le module de capteur (14) au module de bras de support (9) à l'aide d'un deuxième dispositif de serrage (17),
**caractérisé en ce que** le premier et le deuxième dispositifs de serrage (16, 17) sont configurés chacun respectivement pour une force de serrage (K) prédéterminée lorsque les dispositifs de serrage (16, 17) respectifs sont en position fermée.

2. Finisseur de route selon la revendication 1, **caractérisé en ce que** le premier et le deuxième dispositifs de serrage (16, 17) sont respectivement des dispositifs de serrage rapide.

3. Finisseur de route selon l'une des revendications précédentes, **caractérisé en ce que** la force de serrage (K) prédéterminée est indépendante d'une force d'actionnement au niveau des dispositifs de serrage (16, 17) respectifs.

4. Finisseur de route selon l'une des revendications précédentes, **caractérisé en ce que** le premier et/ou le deuxième dispositif de serrage (16, 17) comprend un système de transmission de serrage à levier (25, 25').

5. Finisseur de route selon la revendication 4, **caractérisé en ce que** le système de transmission de serrage à levier (25, 25') comprend un levier de manoeuvre (30, 30') pour ouvrir et fermer le dispositif de serrage (16, 17) respectif, un levier d'appui (31, 31'), ainsi qu'un levier de serrage (32, 32'), qui applique la force de serrage (K) prédéterminée pour la fixation au module de bras de support (9).

6. Finisseur de route selon la revendication 5, **caractérisé en ce que** le premier et/ou deuxième dispositif de serrage (16, 17) comprend au moins un crochet d'appui (26, 26'), qui est réalisé en tant que butée d'appui pour la fixation au module de bras de support (9).

7. Finisseur de route selon la revendication 6, **caractérisé en ce que** le levier de serrage (32, 32') et le crochet d'appui (26, 26') sont couplés au module de bras de support (9) sur des côtés opposés de celui-ci, lorsque le premier et/ou deuxième dispositif de serrage (16, 17) est fermé.

8. Finisseur de 4 à 7 précédentes, **caractérisé en ce que** dans la position fermée du premier et/ou du deuxième dispositif de serrage (16, 17), les points de rotation suivants du système de transmission de serrage à levier (25, 25') sont placés de manière telle, qu'un point de rotation (B, B') présent entre le levier d'appui (31, 31') et le levier de manoeuvre (30, 30'), soit situé au moins en partie sur une droite fictive (G, G') entre un point de rotation (A, A') situé sur un logement du levier d'appui (31, 31') et un point de rotation (C, C') présent entre le levier de serrage (32, 32') et le levier de manoeuvre (30, 30').

9. Finisseur de route selon l'une des revendications précédentes, **caractérisé en ce que** sur le premier et/ou le deuxième dispositif de serrage (16, 17) peut être fixée une poutrelle centrale (10) du module de bras de support (9), qui est orientée de manière inclinée vue dans un plan de projection vertical, et/ou le premier et/ou deuxième dispositif de serrage (16, 17) présente une pièce de support (24, 24') et un disque rotatif (29, 29'), qui y est couplé, ces deux éléments étant montés rotatifs l'un par rapport à l'autre, à l'intérieur d'une plage angulaire prédéterminée.

10. Finisseur de route selon la revendication 9, **caractérisé en ce que** pour le premier dispositif de serrage (16), la pièce de support (24) est montée rotative par rapport au disque rotatif (29), lorsque le module de bras de support (9) est fixé au module de bras pivotant (7) par le premier dispositif de serrage (16), et pour le deuxième dispositif de serrage (17), le disque rotatif (29') est monté rotatif par rapport à la pièce de support (24'), lorsque le module de capteur (14) est fixé au module de bras de support (9) par le deuxième dispositif de serrage (17).

11. Finisseur de route selon la revendication 9 ou la revendication 10, **caractérisé en ce que** la pièce de support (24, 24') et le disque rotatif (29, 29') peuvent être fixés l'un par rapport à l'autre à l'encontre d'une rotation.

12. Finisseur de route selon l'une des revendications 9 à 11, **caractérisé en ce qu'**un système de transmission de serrage à levier (40) formé sur le disque rotatif (29') du deuxième dispositif de serrage (17), est un système de serrage rapide à excentrique destiné à recevoir un tube de capteur (18) du module de capteur (14).

13. Finisseur de route selon l'une des revendications précédentes, **caractérisé en ce que** le module de capteur (14) comporte un logement d'accueil de capteur (50), l'unité de capteur pouvant être positionnée à l'aide d'une liaison par rainure et languette (51) dans le logement d'accueil de capteur (50), et/ou l'unité de capteur (6) pouvant être fixée à l'encontre d'une rotation, au module de capteur (14), au niveau d'un système de transmission de serrage à levier (34', 45) faisant partie du module de capteur (14).

14. Finisseur de route selon l'une des revendications 1 à 4, **caractérisé en ce que** le module de pivotement (7') présente au moins par secteurs, un secteur de guidage (59), et le module de bras de support (9') comprend une pièce coulissante (60), qui est montée réglable le long du secteur de guidage (59), et qui peut être fixée à celui-ci au moyen du premier dispositif de serrage (16').

15. Finisseur de route selon la revendication 14, **caractérisé en ce que** la pièce coulissante (60) est un tube profilé et le secteur de guidage (59) est d'une configuration creuse, en vue de recevoir le tube profilé.
